# EUROPEAN PATENT APPLICATION

(11) **EP 4 675 376 A1**
(43) Date of publication of application: **07.01.2026**
(21) Application number: 24185692.1
(22) Date of filing: 01.07.2024
(51) Int. Cl.: G05B 19/042, G06F 30/13, G06F 111/20

(54) **METHOD FOR ASSISTING IN CREATING AND CONFIGURING A PHYSICAL BARRIER SYSTEM**

(71) Applicant: dormakaba Schweiz AG, 8623 Wetzikon (CH)
(72) Inventor: GUPTA, Chandra Prakash, 44789 Bochum (DE)
(74) Representative: Balder IP Law, S.L.

(57) **Abstract**

According to a first aspect of the present invention, it may be provided a computer-implemented assisting method for creating and configuring a physical barrier system, the method being performed by a design and configuration software, preferably one single software application. The method may comprise providing a graphical user interface including a set of functionalities being available for the physical barrier system. The method may comprise receiving a first user input including a selection of multiple functionalities out of the set of functionalities. The method may comprise creating a virtual template for the physical barrier system, the virtual template including a selection of a set of hardware components, wherein the selection of the set of hardware components is performed automatically by the design and configuration software based on the first user input in a manner that the multiple functionalities are supported. The method may comprise upon physically creating the physical barrier system including the selected hardware components, configuring the set of hardware components according to the multiple functionalities.

## Description

### TECHNICAL FIELD

The present disclosure generally relates to the field of computer aided design and configuration for physical barrier systems. More specifically, the present disclosure relates to a computer-implemented assisting method for creating and configuring a physical barrier system. Further, the present disclosure includes a physical barrier system which is physically created using said method. Further, the present disclosure includes a data processing apparatus, preferably a computer device, comprising means for carrying out said method. Further, the present disclosure includes a computer program or a computer-readable medium having stored thereon a computer program for carrying out said method.

### BACKGROUND

In the field of physical barrier systems, it is common to employ various hardware components such as electronic locks, door operators, and access control readers to manage and control access to different areas. These systems are often used in commercial buildings, industrial facilities, and residential complexes to ensure security and facilitate controlled access. Known systems typically involve a manual process of selecting and configuring the necessary hardware components, which can be time-consuming and prone to errors. This manual configuration often requires specialized knowledge and expertise, making it challenging for non-experts to set up and maintain such systems effectively.

Despite the substantial advances in the field of physical barrier systems, there remains a need for more streamlined and user-friendly methods for designing and configuring these systems. Traditional approaches often lack integration and automation, requiring users to interact with multiple software applications and tools to achieve the desired setup. This fragmented approach can lead to inconsistencies and inefficiencies, particularly when dealing with complex configurations involving multiple functionalities and hardware components.

Moreover, the manual nature of existing configuration processes increases the likelihood of overlooking potential issues that could arise from the interaction dependencies between different hardware components. For instance, the integration of an electronic door lock with an access control reader and an emergency button may involve complex dependencies that are not easily identifiable.

Another significant limitation of current systems is the lack of automated parametrization and updating capabilities. Once a physical barrier system is set up, any changes to its configuration or functionalities often require manual intervention. This can be particularly cumbersome when dealing with large-scale installations or when frequent updates are necessary to adapt to changing security requirements. The absence of automated mechanisms to update and amend configurations based on user inputs or identified issues further exacerbates the problem, resulting in a less responsive and adaptable system.

Furthermore, existing systems do not typically offer intuitive user interfaces that facilitate easy configuration and modification of barrier systems. The lack of user-friendly user interfaces means that users must rely on technical documentation and support from experts to perform even basic configuration tasks. This not only increases the dependency on specialized personnel but also limits the accessibility of these systems to a broader user base.

It is therefore a technical problem underlying the present invention to provide a method and system for creating and configuring physical barrier systems that at least partially overcomes the disadvantages of known systems.

### SUMMARY OF THE DISCLOSURE

The objective is solved by the subject-matter defined in the independent claims. Advantageous modifications of embodiments of the present disclosure are defined in the dependent claims as well as in the description and the figures.

According to a first aspect of the present invention, it may be provided a computer-implemented assisting method for creating and configuring a physical barrier system, the method being performed by a design and configuration software, preferably one single software application. The method may comprise providing a graphical user interface including a set of functionalities being available for the physical barrier system. The method may comprise receiving a first user input including a selection of multiple functionalities out of the set of functionalities. The method may comprise creating a virtual template for the physical barrier system, the virtual template including a selection of a set of hardware components, wherein the selection of the set of hardware components is performed automatically by the design and configuration software based on the first user input in a manner that the multiple functionalities are supported. The method may comprise upon physically creating the physical barrier system including the selected hardware components, configuring the set of hardware components according to the multiple functionalities.

Throughout the present disclosure, the term "computer-implemented assisting method" may refer to a sequence of steps executed by a computer system to aid in the creation and configuration of a physical barrier system. This method may involve various computational processes and user interactions facilitated by software.

Throughout the present disclosure, the term "physical barrier system" should be understood as a system comprising physical components such as doors, locks, and access control devices that restrict or allow access to certain areas. Examples of physical barrier systems may include security doors, automated gates, and turnstiles.

Throughout the present disclosure, the expression "design and configuration software" may refer to a software application or suite of applications that enables users to design and configure physical barrier systems. This software may include tools for selecting hardware components, defining functionalities, and generating configurations.

Throughout the present disclosure, the term "graphical user interface" may include a visual interface that allows users to interact with the design and configuration software. This interface may provide visual representations of the physical barrier system and its components, as well as options for selecting and configuring functionalities. It is of course encompassed that various elements included by the graphical user interface include text elements or are build as section lists in text format. Also, various elements of the graphical user interface may include symbols and/or the like.

Throughout the present disclosure, the term "first user input" may refer to the initial input provided by the user, which includes the selection of multiple functionalities from the set of available functionalities. This input may be provided through the graphical user interface. A set of available functionalities may include at least one functionality.

Throughout the present disclosure, the term "virtual template" may refer to a digital representation of the physical barrier system, including the selected hardware components and their configurations. This template may be used to plan, simulate and/or validate the system before physical creation.

Throughout the present disclosure, the term "hardware components" may include physical devices and elements that make up the physical barrier system. Examples of hardware components may include electronic locks, door operators, and access control readers.

Throughout the present disclosure, the expression "set of functionalities being available" may refer to a range of possible functions that can be performed by the physical barrier system or its individual hardware components. These functionalities may include operations such as locking, unlocking, opening, closing, and access control. A set of functionalities being available may include at least one available functionality.

Throughout the present disclosure, the term "selection of multiple functionalities" may refer to the process of choosing several functionalities from the set of available functionalities. This selection may be based on the specific requirements and preferences of the user.

Throughout the present disclosure, the expression "selection of a set of hardware components" may refer to the process of choosing specific hardware components that will be used to create the physical barrier system. This selection may be based on the functionalities chosen by the user and may be performed automatically by the design and configuration software. A set of hardware components may include at least one hardware component.

Throughout the present disclosure, the term "automatically" may refer to actions performed by the design and configuration software without requiring manual intervention from the user. These actions may be based on predefined rules, algorithms, or user inputs. Further these actions may be triggered by a triggering user input.

Throughout the present disclosure, the term "supported" may be understood as synonymous with "realized" or "implemented." It may refer to the capability of the selected hardware components to perform the chosen functionalities as specified in the virtual template.

Throughout the present disclosure, the term "physically creating" may refer to the actual assembly and installation of the selected hardware components to form the physical barrier system. This process may involve physical construction and integration of the components.

Throughout the present disclosure, the term "configuring" may refer to the process of setting up and adjusting the hardware components to ensure they perform the desired functionalities. This may include programming, calibration, and other setup activities.

The method may provide several technical advantages. It may streamline the process of creating and configuring physical barrier systems by automating the selection of hardware components based on user input. This may reduce the time and effort required for system setup. The method may enhance accuracy by ensuring that the selected hardware components support the desired functionalities, thereby minimizing configuration errors and technical issues. It may also facilitate user interaction through a graphical user interface, making the design and configuration process more intuitive and accessible. Furthermore, the method may enable the creation of a virtual template, allowing for simulation and validation of the system before physical implementation, which may help identify and address potential issues early. Finally, the method may provide flexibility by allowing users to select and configure multiple functionalities, thereby supporting a wide range of physical barrier system configurations.

It may be provided that the method further comprises receiving a second user input including parametrization information associated with at least part of the multiple functionalities. It may be further provided that the method comprises automatically generating parametrization data based on the second user input and thereby determining, in the virtual template, a desired behaviour of the physical barrier system. It may be further provided that the method comprises upon physically creating the physical barrier system including the selected hardware components, configuring the set of hardware components of the physical barrier system according to the generated parametrization data, in particular for facilitating the virtual barrier system to behave according to the virtual template.

Throughout the present disclosure, the term "second user input" may refer to additional input provided by the user after the first user input. This input may include parametrization information that specifies how certain functionalities should be configured or adjusted.

Throughout the present disclosure, the term "parametrization information" may refer to data or settings that define specific parameters for the functionalities of the physical barrier system. This information may include details such as timing, sensitivity, thresholds, and other operational characteristics.

Throughout the present disclosure, the term "parametrization data" may refer to the data generated by the design and configuration software based on the second user input. This data may be used to configure the hardware components of the physical barrier system to achieve the desired behaviour.

Throughout the present disclosure, the term "desired behaviour" may refer to the specific way in which the physical barrier system is intended to operate. This behaviour may be defined by the parametrization data and may include actions such as opening, closing, locking, and unlocking in response to certain conditions.

The method may provide several technical advantages. It may allow for more precise and customized configuration of the physical barrier system by enabling the user to provide detailed parametrization information. This may ensure that the system operates according to the specific needs and preferences of the user. The method may also enhance the accuracy and reliability of the system by automatically generating parametrization data based on the user input, thereby reducing the likelihood of errors. Furthermore, it may facilitate the creation of a virtual template that accurately reflects the desired behaviour of the physical barrier system, allowing for thorough testing and validation before physical implementation. Additionally, the method may improve the flexibility and adaptability of the system by allowing for easy adjustments and reconfigurations based on changing requirements. Finally, it may streamline the overall setup process by automating the configuration of the hardware components according to the generated parametrization data, thereby saving time and effort for the user.

It may be provided that the method further comprises determining, through the design and configuration software and based on the virtual template, interaction dependencies between hardware components in the set of hardware components. It may be further provided that the method comprises performing simulation, using a simulation environment, of the at least one functionality and identifying potential issues before physically creating the physical barrier system based on the determined interaction dependencies, wherein the simulation environment is preferably cloud-based. It may be further provided that determining the interaction dependencies and/or performing the simulation is performed using at least one machine-learning model, the machine-learning model being trained on a dataset of virtual templates and corresponding labels representing potential issues. The interaction dependencies may occur in particular between a first configuration data portion being associated with a first hardware component and a second configuration data portion being associated with a second hardware component.

Throughout the present disclosure, the term "interaction dependencies" may refer to the relationships and interactions between different hardware components within the physical barrier system. This may include functionalities and configuration of said hardware components. Further, these dependencies may include how one component's operation affects or is affected by another component.

Throughout the present disclosure, the term "simulation environment" may refer to a virtual platform or software tool that allows for the testing and validation of the physical barrier system's functionalities. This environment may simulate the behavior of the system based on the virtual template and interaction dependencies.

Throughout the present disclosure, the term "cloud-based" may refer to a simulation environment that is hosted on remote servers and accessed over the internet. This may allow for scalable and flexible simulation capabilities without the need for local computational resources.

Throughout the present disclosure, the term "machine-learning model" may refer to a computational model that uses algorithms and statistical techniques to learn patterns and make predictions based on data. In this context, the machine-learning model may be trained on a dataset of virtual templates and corresponding labels representing potential issues.

The machine-learning model may be a supervised learning model, which is trained on labeled data to make predictions or classifications. Examples of suitable models include:
- Decision Trees: These models use a tree-like structure to make decisions based on input features.
- Random Forests: An ensemble learning method that combines multiple decision trees to improve accuracy and robustness.
- Support Vector Machines (SVM): These models find the optimal hyperplane that separates different classes in the feature space.
- Neural Networks: Deep learning models that consist of multiple layers of neurons, capable of learning complex patterns and relationships.
- Gradient Boosting Machines (GBM): An ensemble technique that builds models sequentially, each one correcting the errors of its predecessor.

For the purpose of this method, a neural network or a random forest model may be particularly effective due to their ability to handle complex interactions and dependencies between hardware components.

The machine-learning model may be trained using supervised learning techniques. The training process may involve the following steps:
1. Data Collection: Collecting a dataset of virtual templates and corresponding labels representing potential issues. Each virtual template may include information about the hardware components, their configurations, and interaction dependencies.
2. Data Pre-Processing: Preparing the collected data for training. This may involve cleaning the data, handling missing values, and normalizing or standardizing the features.
3. Feature Engineering: Extracting relevant features from the virtual templates that can be used as input to the model. Examples of features may include the types of hardware components, their configurations, and the nature of their interactions.
4. Model Training: Feeding the pre-processed data and extracted features into the machine-learning model and training it to learn the patterns and relationships that lead to potential issues.
5. Model Validation: Evaluating the trained model on a separate validation dataset to assess its performance and fine-tune the model parameters.
6. Model Testing: Testing the final model on a test dataset to ensure its generalizability and robustness.

The training data for the machine-learning model may come from various sources, including:
- Historical Data: Data from previously configured physical barrier systems, including their virtual templates and any issues that were identified and resolved.
- Simulated Data: Data generated through simulations of different configurations and interactions of hardware components, including both successful and problematic scenarios.
- Expert Annotations: Data labeled by experts who manually identify potential issues in various virtual templates based on their knowledge and experience.

Pre-processing the training data may be advantageous to enhance the quality and effectiveness of the machine-learning model. Examples of training data pre-processing may include:
1. Data Cleaning: Removing or correcting any errors, inconsistencies, or duplicates in the dataset. This may involve handling missing values by imputation or deletion.
2. Normalization/Standardization: Scaling the features to a common range or distribution to ensure that no single feature dominates the learning process. For example, normalizing the numerical features to a range of [0, 1] or standardizing them to have a mean of 0 and a standard deviation of 1.
3. Categorical Encoding: Converting categorical features (e.g., types of hardware components) into numerical representations using techniques such as one-hot encoding or label encoding.
4. Feature Selection: Identifying and selecting the most relevant features for the model to improve its performance and reduce complexity. This may involve techniques such as correlation analysis or feature importance ranking.
5. Data Augmentation: Generating additional training examples by applying transformations to the existing data, such as rotating or flipping virtual templates, to increase the diversity and robustness of the dataset.

By configuring the machine-learning model with these aspects in mind, the method can effectively determine interaction dependencies and identify potential issues in the physical barrier system, leading to a more reliable and robust configuration process.

The method may provide several technical advantages. It may enhance the reliability and robustness of the physical barrier system by identifying potential issues before physical creation, thereby reducing the likelihood of operational failures. The method may also improve the accuracy of the system's configuration by determining interaction dependencies between hardware components, ensuring that all components work harmoniously together. Furthermore, the use of a simulation environment may allow for thorough testing and validation of the system's functionalities, providing a safe and controlled setting to identify and address any issues. Additionally, the cloud-based nature of the simulation environment may offer scalability and flexibility, enabling users to perform complex simulations without the need for extensive local resources. Finally, the incorporation of a machine-learning model may enhance the predictive capabilities of the simulation, allowing for more accurate identification of potential issues based on historical data and learned patterns.

It may be provided that the method further comprises automatically amending, based on the identified potential issues, the set of hardware components to eliminate the identified potential issues.

Throughout the present disclosure, the term "automatically amending the set of hardware components" may refer to the process of making changes or adjustments to the set of hardware components without requiring manual intervention from the user. This process may be performed by the design and configuration software based on the identified potential issues. Previous to the actual automatic amendment, the user may be provided with a question via the graphical user interface to accept or deny the amendment. Thus, automatically amending may involve a pre-step of suggesting the amendment to the user.

Throughout the present disclosure, the term "identified potential issues" may refer to problems or conflicts detected during the simulation of the physical barrier system's functionalities. These issues may arise from interaction dependencies between hardware components and may affect the system's performance or reliability.

The method may provide several technical advantages. It may enhance the reliability and robustness of the physical barrier system by automatically addressing potential issues before physical creation, thereby reducing the likelihood of operational failures. The method may also improve the accuracy and efficiency of the system's configuration by making necessary adjustments to the hardware components based on the identified issues. Furthermore, the automatic amendment process may save time and effort for the user by eliminating the need for manual intervention and adjustments. Additionally, it may ensure that the final physical barrier system operates as intended, with all potential issues resolved before implementation. Finally, the method may provide a more streamlined and user-friendly experience by automating the detection and resolution of issues, making the design and configuration process more efficient and effective.

It may be provided that the method further comprises automatically updating, based on the identified potential issues, the generated parametrization data to eliminate the identified potential issues. It may be further provided that the method optionally comprises updating the physical barrier system accordingly.

One example for automatically updating the parametrization data is amending the duration time of a short term unlock operation, e.g., from 10 seconds to 5 seconds. Another example would be amending the duration of an acoustic and/or visual alarm in an emergency situation.

It may further be provided displaying the status of the hardware components over time for facilitating a foundation data set based on which further fine tuning of the parametrization data may be performed.

Throughout the present disclosure, the term "automatically updating the generated parametrization data" may refer to the process of modifying the generated parametrization data without requiring manual intervention from the user. This process may be performed by the design and configuration software based on the identified potential issues. Previous to the actual automatic updating, the user may be provided with a question via the graphical user interface to accept or deny the update. Thus, automatically updating may involve a pre-step of suggesting the update to the user.

Throughout the present disclosure, the term "generated parametrization data" may refer to the data created by the design and configuration software based on the second user input. This data defines the specific parameters for the functionalities of the physical barrier system.

Throughout the present disclosure, the term "updating the physical barrier system accordingly" may refer to the process of adjusting the physical barrier system to reflect the changes made to the parametrization data. This may involve reconfiguring the hardware components to align with the updated parameters.

The method may provide several technical advantages. It may enhance the reliability and robustness of the physical barrier system by automatically updating the parametrization data to address potential issues, thereby ensuring that the system operates as intended. The method may also improve the accuracy and efficiency of the system's configuration by making necessary adjustments to the parametrization data based on the identified issues. Furthermore, the automatic updating process may save time and effort for the user by eliminating the need for manual intervention and adjustments. Additionally, it may ensure that the final physical barrier system operates with the most up-to-date and accurate parameters, thereby optimizing its performance. Finally, the method may provide a more streamlined and user-friendly experience by automating the detection and resolution of issues, making the design and configuration process more efficient and effective.

The simulation model provides a reference response model for the physical barrier system based on the current use-case conditions at the door. This response model can be in the form of a sequence diagram and/or a visualization method and/or as a text output for the expected outputs from the hardware components which are active in that use-case condition. Such a reference response model is beneficial for debugging the field issues where doing an on-field analysis requires much more time and it is usually complex.

It may be provided that the method further comprises automatically amending or updating is performed upon detecting a change in the parametrization data caused by a third user input.

Throughout the present disclosure, the term "automatically amending or updating" may refer to the process of making changes or adjustments to the set of hardware components or the generated parametrization data without requiring manual intervention from the user. This process may be performed by the design and configuration software based on the identified potential issues or changes in user input.

Throughout the present disclosure, the term "third user input" may refer to additional input provided by the user after the first and second user inputs. This input may include changes or modifications to the parametrization data, which may necessitate further adjustments to the hardware components or the parametrization data.

The method may provide several technical advantages. It may enhance the flexibility and adaptability of the physical barrier system by allowing for automatic amendments or updates in response to changes in user input. This may ensure that the system remains up-to-date and aligned with the user's evolving requirements. The method may also improve the accuracy and efficiency of the system's configuration by making necessary adjustments based on the most recent user input. Furthermore, the automatic amendment or updating process may save time and effort for the user by eliminating the need for manual intervention and adjustments. Additionally, it may ensure that the final physical barrier system operates with the most accurate and up-to-date parameters, thereby optimizing its performance. Finally, the method may provide a more streamlined and user-friendly experience by automating the detection and resolution of issues, making the design and configuration process more efficient and effective.

It may be provided that the method comprises the graphical user interface allowing for drag-and-drop assembly of a logic providing the first and/or second and/or third user input.

Throughout the present disclosure, the term "drag-and-drop assembly" may refer to a user interface feature that allows users to select and move elements within the interface using a pointing device, such as a mouse. This feature may enable users to easily assemble and configure the logic for the physical barrier system by dragging and dropping components or functionalities into place.

Throughout the present disclosure, the term "logic" may refer to the sequence of operations or rules that define how the physical barrier system should function. This logic may be created by the user through the graphical user interface and may include the first, second, and third user inputs.

The method may provide several technical advantages. It may enhance the user experience by providing an intuitive and user-friendly graphical user interface that allows for drag-and-drop assembly of the system's logic. This may make the design and configuration process more accessible to users with varying levels of technical expertise. The method may also improve the efficiency of the configuration process by enabling users to quickly and easily assemble the logic for the physical barrier system. Furthermore, the drag-and-drop feature may reduce the likelihood of errors by providing a visual and interactive way to configure the system, ensuring that all components and functionalities are correctly placed and connected. Additionally, it may provide flexibility by allowing users to easily modify and adjust the logic as needed, supporting a wide range of configurations and use cases. Finally, the method may streamline the overall setup process by integrating the drag-and-drop assembly feature into the graphical user interface, making it easier for users to provide the first, second, and third user inputs and create a fully functional physical barrier system.

It may be provided that the method comprises the design and configuration software allowing for assignment of privilege levels to different users, enabling control over who can provide and/or modify first and/or second and/or third user input.

Throughout the present disclosure, the term "design and configuration software" may refer to a software application or suite of applications that enables users to design and configure physical barrier systems. This software may include tools for selecting hardware components, defining functionalities, and generating configurations.

Throughout the present disclosure, the term "privilege levels" may refer to different levels of access and control assigned to users within the design and configuration software. These levels may determine what actions a user is permitted to perform, such as providing or modifying user inputs.

Throughout the present disclosure, the term "different users" may include various individuals or roles that interact with the design and configuration software. Examples of different users may include system administrators, security personnel, and general users.

The method may provide several technical advantages. It may enhance the security and integrity of the physical barrier system by allowing for the assignment of privilege levels, thereby controlling who can provide and/or modify user inputs. This may prevent unauthorized changes and ensure that only authorized personnel can make critical adjustments. The method may also improve the management and oversight of the system's configuration by enabling administrators to assign and manage privilege levels for different users. Furthermore, it may provide flexibility by allowing for the customization of access controls based on the specific needs and roles within an organization. Additionally, the assignment of privilege levels may facilitate collaboration among multiple users by clearly defining their responsibilities and permissions within the design and configuration software. Finally, the method may streamline the overall setup and maintenance process by providing a structured and secure way to manage user inputs, ensuring that the physical barrier system operates as intended and remains secure.

It may be provided that the method further comprises generating an alert message in case if the point in time of the most recent update of the virtual template is after the point in time of a most recent update of the physical barrier system.

Throughout the present disclosure, the term "alert message" may refer to a notification or warning generated by the design and configuration software. This message may inform the user of specific conditions or events that require attention.

Throughout the present disclosure, the term "point in time" may refer to a specific moment or timestamp indicating when an event or action occurred. In this context, it may refer to the time at which the virtual template or the physical barrier system was last updated.

Throughout the present disclosure, the term "most recent update" may refer to the latest changes or modifications made to the virtual template or the physical barrier system. This may include updates to the configuration, parametrization data, or hardware components.

The method may provide several technical advantages. It may enhance the reliability and consistency of the physical barrier system by generating an alert message when there is a discrepancy between the update times of the virtual template and the physical system. This may ensure that the physical barrier system is always aligned with the most current configuration and settings. The method may also improve the management and oversight of the system's updates by providing timely notifications to the user, allowing for prompt action to address any discrepancies. Furthermore, the alert message may help prevent potential issues or conflicts that could arise from outdated configurations, thereby maintaining the optimal performance of the system. Additionally, it may provide a safeguard against human error by automatically monitoring and comparing update times, reducing the likelihood of oversight. Finally, the method may streamline the overall maintenance process by providing clear and actionable alerts, ensuring that the physical barrier system remains up-to-date and operates as intended.

It may be provided that the method further comprises storing the virtual template at least on two data storages, wherein the at least two data storages may include: a cloud-based data storage and/or a local data storage being located essentially nearby the physical barrier system or a local data storage being located in a building in which the physical barrier system is located after creation.

Throughout the present disclosure, the term "storing" may refer to the process of saving or maintaining data in a designated location for future access and use. In this context, it may involve saving the virtual template in one or more data storages.

Throughout the present disclosure, the term "data storages" may include various types of storage mediums or devices where data can be saved. Examples of data storages may include cloud-based storage, local hard drives, and network-attached storage devices.

Throughout the present disclosure, the term "cloud-based data storage" may refer to a storage solution that is hosted on remote servers and accessed over the internet. This type of storage may offer scalability, flexibility, and remote access capabilities.

Throughout the present disclosure, the term "local data storage" may refer to storage devices that are physically located near the physical barrier system or within the same building. Examples of local data storage may include on-site servers, hard drives, and other local storage solutions.

The method may provide several technical advantages. It may enhance the reliability and accessibility of the virtual template by storing it in multiple data storages, ensuring that the data is available even if one storage location fails. The method may also improve data security by providing redundant storage options, reducing the risk of data loss. Furthermore, the use of both cloud-based and local data storage may offer flexibility, allowing users to choose the most suitable storage solution based on their specific needs and preferences. Additionally, storing the virtual template in a local data storage near the physical barrier system may ensure faster access and retrieval times, which may be critical for real-time updates and configurations. Finally, the method may streamline the overall data management process by providing clear and structured storage options, ensuring that the virtual template is always accessible and up-to-date.

It may be provided that the method comprises the set of functionalities being available for the physical barrier system includes one or more of the following: escape route functions that may be based on an emergency button and/or a lock; automatic door operation functions for various types of doors, like swing doors, revolving doors, sliding doors and/or the like, wherein automatic door operation functions may include opening time, operating speed, activation and/or deactivation of sensors, and/or the like; access control functions that may be based on access control readers and/or may include credential validity decisions.

Throughout the present disclosure, the term "escape route functions" may refer to functionalities that facilitate safe and quick evacuation in case of an emergency. These functions may be based on components such as emergency buttons and locks that allow for easy exit.

Throughout the present disclosure, the term "emergency button" may refer to a button or switch that can be activated in case of an emergency to trigger specific actions, such as unlocking doors or sounding alarms. Examples of emergency buttons may include push buttons and break-glass units.

Throughout the present disclosure, the term "automatic door operation functions" may refer to functionalities that control the automatic opening and closing of various types of doors. These functions may include parameters such as opening time, operating speed, and the activation or deactivation of sensors.

Throughout the present disclosure, the term "swing doors" may refer to doors that open by swinging on hinges, either inward or outward. Examples of swing doors may include single-hinged doors and double-hinged doors.

Throughout the present disclosure, the term "revolving doors" may refer to doors that rotate around a central axis, allowing for continuous entry and exit. Examples of revolving doors may include manual and automatic revolving doors.

Throughout the present disclosure, the term "sliding doors" may refer to doors that open by sliding horizontally along a track. Examples of sliding doors may include single-panel and multi-panel sliding doors.

Throughout the present disclosure, the term "access control functions" may refer to functionalities that manage and control access to specific areas. These functions may be based on components such as access control readers and may include credential validity decisions.

Throughout the present disclosure, the term "access control readers" may refer to devices that read and verify access credentials, such as key cards, RFID tags, or biometric data. Examples of access control readers may include card readers, fingerprint scanners, and facial recognition systems.

Throughout the present disclosure, the term "credential validity decisions" may refer to the process of verifying whether an access credential is valid and authorized for entry. This process may involve checking the credential against a database of authorized users.

The method may provide several technical advantages. It may enhance the versatility and functionality of the physical barrier system by supporting a wide range of available functionalities, catering to different needs and use cases. The method may also improve safety by including escape route functions that facilitate quick and safe evacuation in emergencies. Furthermore, the inclusion of automatic door operation functions may provide convenience and efficiency, allowing for seamless and automated control of various types of doors. Additionally, the access control functions may enhance security by ensuring that only authorized individuals can access specific areas, thereby preventing unauthorized entry. Finally, the method may offer flexibility by allowing users to select and configure the specific functionalities that best meet their requirements, ensuring that the physical barrier system operates as intended and provides optimal performance.

It may be provided that the method comprises the set of functionalities being available for the physical barrier system includes one or more of the following: escape route functions that may be based on an emergency button and/or a lock; automatic door operation functions for various types of doors, like swing doors, revolving doors, sliding doors and/or the like, wherein automatic door operation functions may include opening time, operating speed, activation and/or deactivation of sensors, and/or the like; access control functions that may be based on access control readers and/or may include credential validity decisions.

Throughout the present disclosure, the term "set of functionalities being available" may refer to a range of possible functions that can be performed by the physical barrier system or its individual hardware components. These functionalities may include operations such as locking, unlocking, opening, closing, and access control.

Throughout the present disclosure, the term "escape route functions" may refer to functionalities that facilitate safe and quick evacuation in case of an emergency. These functions may be based on components such as emergency buttons and locks that allow for easy exit.

Throughout the present disclosure, the term "emergency button" may refer to a button or switch that can be activated in case of an emergency to trigger specific actions, such as unlocking doors or sounding alarms. Examples of emergency buttons may include push buttons and break-glass units.

Throughout the present disclosure, the term "automatic door operation functions" may refer to functionalities that control the automatic opening and closing of various types of doors. These functions may include parameters such as opening time, operating speed, and the activation or deactivation of sensors.

Throughout the present disclosure, the term "swing doors" may refer to doors that open by swinging on hinges, either inward or outward. Examples of swing doors may include single-hinged doors and double-hinged doors.

Throughout the present disclosure, the term "revolving doors" may refer to doors that rotate around a central axis, allowing for continuous entry and exit. Examples of revolving doors may include manual and automatic revolving doors.

Throughout the present disclosure, the term "sliding doors" may refer to doors that open by sliding horizontally along a track. Examples of sliding doors may include single-panel and multi-panel sliding doors.

Throughout the present disclosure, the term "access control functions" may refer to functionalities that manage and control access to specific areas. These functions may be based on components such as access control readers and may include credential validity decisions.

Throughout the present disclosure, the term "access control readers" may refer to devices that read and verify access credentials, such as key cards, RFID tags, or biometric data. Examples of access control readers may include card readers, fingerprint scanners, and facial recognition systems.

Throughout the present disclosure, the term "credential validity decisions" may refer to the process of verifying whether an access credential is valid and authorized for entry. This process may involve checking the credential against a database of authorized users.

The method may provide several technical advantages. It may enhance the versatility and functionality of the physical barrier system by supporting a wide range of available functionalities, catering to different needs and use cases. The method may also improve safety by including escape route functions that facilitate quick and safe evacuation in emergencies. Furthermore, the inclusion of automatic door operation functions may provide convenience and efficiency, allowing for seamless and automated control of various types of doors. Additionally, the access control functions may enhance security by ensuring that only authorized individuals can access specific areas, thereby preventing unauthorized entry. Finally, the method may offer flexibility by allowing users to select and configure the specific functionalities that best meet their requirements, ensuring that the physical barrier system operates as intended and provides optimal performance.

It may be provided that the method comprises the set of hardware components being available for the physical barrier system includes one or more of the following: an access component controller comprising a processor and being configured to cause operation of the physical barrier system; an emergency button optionally comprising an illumination unit which may be ring shaped; an electronic door lock; a swing door operator; a sliding door operator; a revolving door operator; an access control reader which may be optionally configured to read RFID-cards and/or to wirelessly communicate with portable user devices for access control and/or for re-configuration of operation parameters; a self-locking lock having an anti panic function; an electronic program switch capable of switching between different operation modes for door operators.

Throughout the present disclosure, the term "set of hardware components being available" may refer to the various physical devices and elements that can be selected and used to create the physical barrier system. These components may include controllers, buttons, locks, door operators, and access control readers.

Throughout the present disclosure, the term "access component controller" may refer to a device that includes a processor and is configured to manage and control the operation of the physical barrier system. This controller may process inputs, execute commands, and coordinate the actions of other hardware components.

Throughout the present disclosure, the term "emergency button" may refer to a button or switch that can be activated in case of an emergency to trigger specific actions, such as unlocking doors or sounding alarms. Examples of emergency buttons may include push buttons and break-glass units. The emergency button may optionally include an illumination unit, which may be ring-shaped, to provide visual indication and enhance visibility.

Throughout the present disclosure, the term "electronic door lock" may refer to a locking mechanism that can be electronically controlled to secure or release a door. Examples of electronic door locks may include keypad locks, smart locks, and electromagnetic locks.

Throughout the present disclosure, the term "swing door operator" may refer to a device that automates the opening and closing of swing doors. This operator may include motors, sensors, and control mechanisms to manage the door's movement.

Throughout the present disclosure, the term "sliding door operator" may refer to a device that automates the opening and closing of sliding doors. This operator may include tracks, motors, and control mechanisms to manage the door's movement.

Throughout the present disclosure, the term "revolving door operator" may refer to a device that automates the rotation of revolving doors. This operator may include motors, sensors, and control mechanisms to manage the door's movement.

Throughout the present disclosure, the term "access control reader" may refer to a device that reads and verifies access credentials, such as key cards, RFID tags, or biometric data. Examples of access control readers may include card readers, fingerprint scanners, and facial recognition systems. The access control reader may be optionally configured to read RFID-cards and/or to wirelessly communicate with portable user devices for access control and/or for re-configuration of operation parameters.

Throughout the present disclosure, the term "self-locking lock" may refer to a lock that automatically secures itself after being closed. This lock may include an anti-panic function, which allows for easy and quick exit in case of an emergency.

Throughout the present disclosure, the term "electronic program switch" may refer to a device that allows for switching between different operation modes for door operators. This switch may include electronic controls and settings to manage the door's behavior.

The method may provide several technical advantages. It may enhance the versatility and functionality of the physical barrier system by supporting a wide range of available hardware components, catering to different needs and use cases. The method may also improve safety by including components such as emergency buttons and self-locking locks with anti-panic functions, ensuring quick and safe evacuation in emergencies. Furthermore, the inclusion of various door operators may provide convenience and efficiency, allowing for seamless and automated control of different types of doors. Additionally, the access control readers may enhance security by ensuring that only authorized individuals can access specific areas, thereby preventing unauthorized entry. Finally, the method may offer flexibility by allowing users to select and configure the specific hardware components that best meet their requirements, ensuring that the physical barrier system operates as intended and provides optimal performance.

According to a second aspect of the present invention, it may be provided a physical barrier system which is physically created using a method according to the first aspect of the present invention.

According to a third aspect of the present invention, it may be provided a data processing apparatus, preferably a computer device, comprising means for carrying out the method of the first aspect of the present invention.

According to a fourth aspect of the present invention, it may be provided a computer program or a computer-readable medium having stored thereon a computer program, the computer program comprising instructions which, when the program is executed by a computer, preferably by a data processing apparatus according to the third aspect of the present invention, cause the computer to carry out the method of the first aspect of the present invention.

All features, technical implementation details and advantages described with respect to any one of the aspects of the present invention described herein are self-evidently mutatis mutandis applicable for any one of the other aspects of the present invention and vice versa.

### BIEF DESCRIPTION OF THE DRAWINGS

Fig. 1 is a schematical illustration of a physical barrier system according to embodiments of the present disclosure.
Fig. 2 is a first flow chart including method steps according to embodiments of the present disclosure.
Fig. 3 is a second flow chart including method steps according to embodiments of the present disclosure.

### DETAILED DESCRIPTION OF THE DRAWINGS

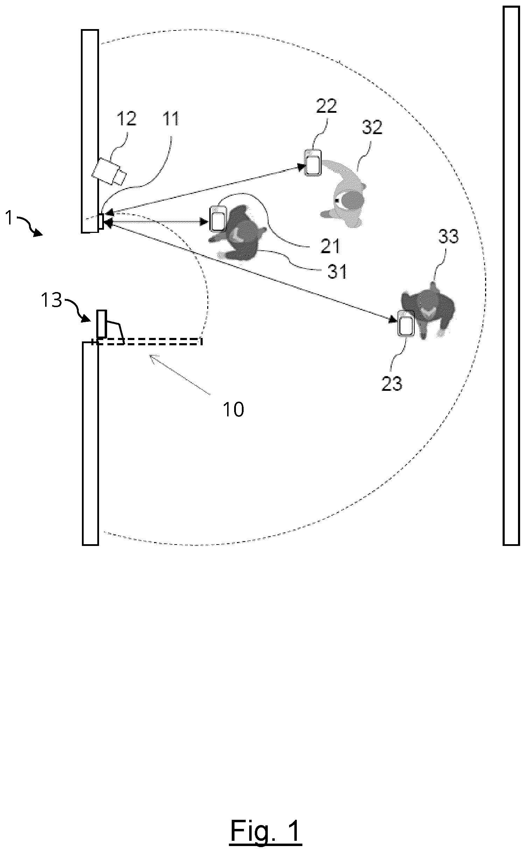

Figure 1 shows a physical barrier system 1 comprising a selection of a set of hardware components 10, 11, 12, 13. Said selection of a set of hardware components 10, 11, 12, 13 includes a door leaf 10, an access control reader 11, a camera 12 and a door closer 13. The hardware components 10, 11, 12, 13 may be selected based on a selection of multiple functionalities out of a set of functionalities being available. For example, for biometric face authentication functionalities, the camera 12 is provided. For example, for reliable closure of the door leaf 10, the door closer 13 is provided. Individuals 31, 32, 33 may gain access via transmission of access credentials through their mobile devices 21, 22, 23 to the access control reader 11. Thus, the access control reader 11 provides the physical barrier system 1 with an access control functionality. Any of the hardware components 10, 11, 12, 13 may comprise a configuration including a parametrization in accordance with the particularities of the desired functionalities. Before creating the physical barrier system 1, a simulation may be performed to find conflicts between hardware components and/or functionalities and/or parametrizations.

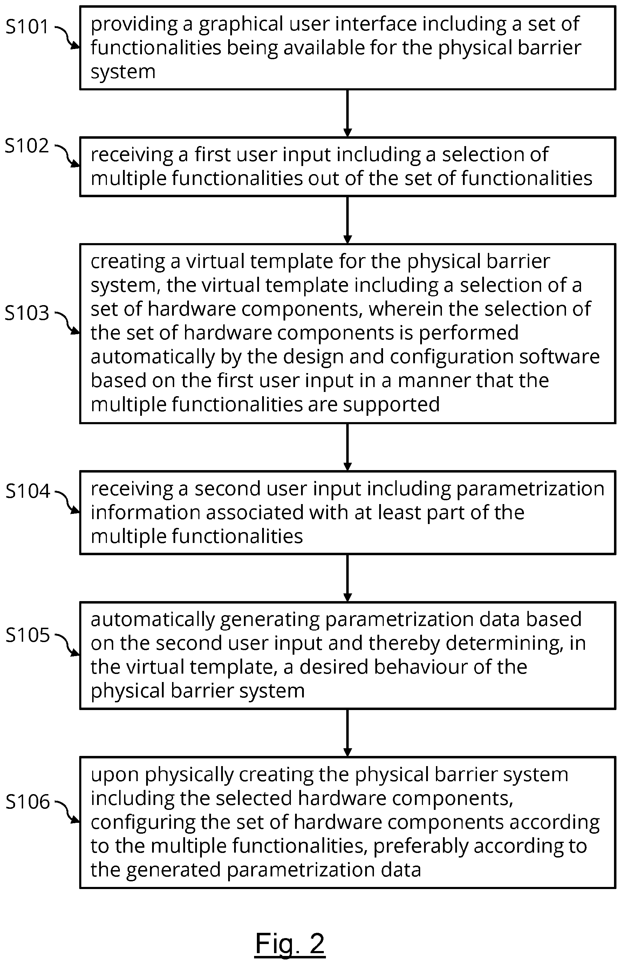

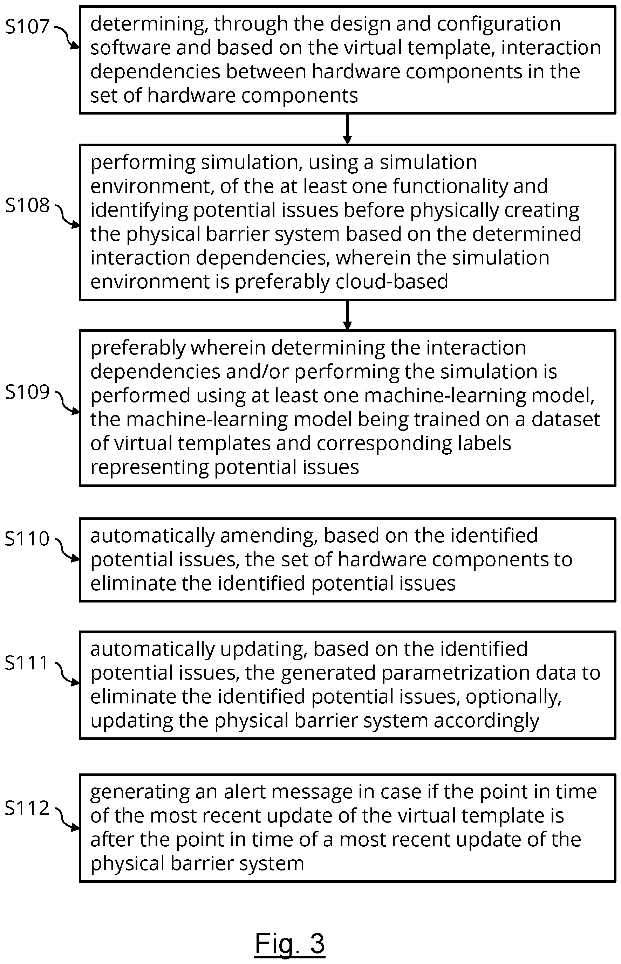

Figure 2 shows a first flow chart according to embodiments of the present disclosure. Figure 3 shows a second flow chart according to embodiments of the present disclosure. The steps may include the following:
providing S101 a graphical user interface including a set of functionalities being available for the physical barrier system 1;
receiving S102 a first user input including a selection of multiple functionalities out of the set of functionalities;
creating S103 a virtual template for the physical barrier system 1, the virtual template including a selection of a set of hardware components 10, 11, 12, 13, wherein the selection of the set of hardware components 10, 11, 12, 13 is performed automatically by the design and configuration software based on the first user input in a manner that the multiple functionalities are supported; upon physically creating the physical barrier system 1 including the selected hardware components 10, 11, 12, 13, configuring S106the set of hardware components 10, 11, 12, 13 according to the multiple functionalities.

The method may further include:
receiving S104 a second user input including parametrization information associated with at least part of the multiple functionalities;
automatically generating S105 parametrization data based on the second user input and thereby determining, in the virtual template, a desired behaviour of the physical barrier system 1;
upon physically creating the physical barrier system 1 including the selected hardware components 10, 11, 12, 13, configuring S106the set of hardware components 10, 11, 12, 13 of the physical barrier system according to the generated parametrization data, in particular for facilitating the virtual barrier system to behave according to the virtual template.

The method may further include:
determining S107, through the design and configuration software and based on the virtual template, interaction dependencies between hardware components 10, 11, 12, 13 in the set of hardware components 10, 11, 12, 13;
performing simulation S108, using a simulation environment, of the at least one functionality and identifying potential issues before physically creating the physical barrier system 1 based on the determined interaction dependencies, wherein the simulation environment is preferably cloud-based,
preferably wherein determining S107 the interaction dependencies and/or performing the simulation S108 is performed S109 using at least one machine-learning model, the machine-learning model being trained on a dataset of virtual templates and corresponding labels representing potential issues.

The method may further include:
automatically amending S110, based on the identified potential issues, the set of hardware components 10, 11, 12, 13 to eliminate the identified potential issues.

The method may further include:
automatically updating S111, based on the identified potential issues, the generated parametrization data to eliminate the identified potential issues;
optionally, updating the physical barrier system accordingly.

Automatically amending or updating may be performed upon detecting a change in the parametrization data caused by a third user input. The graphical user interface may allow for drag-and-drop assembly of a logic providing the first and/or second and/or third user input. The design and configuration software may allow for assignment of privilege levels to different users, enabling control over who can provide and/or modify first and/or second and/or third user input.

The method may further include:
generating 112 an alert message in case if the point in time of the most recent update of the virtual template is after the point in time of a most recent update of the physical barrier system 1.

The method may further include:
storing the virtual template at least on two data storages, wherein the at least two data storages may include: a cloud-based data storage and/or a local data storage being located essentially nearby the physical barrier system 1 or a local data storage being located in a building in which the physical barrier system 1 is located after creation.

The set of functionalities being available for the physical barrier system 1 may include one or more of the following:
- escape route functions that may be based on an emergency button and/or a lock;
- automatic door operation functions for various types of doors, like swing doors, revolving doors, sliding doors and/or the like, wherein automatic door operation functions may include opening time, operating speed, activation and/or deactivation of sensors, and/or the like;
- access control functions that may be based on access control readers and/or may include credential validity decisions.

The set of hardware components 10, 11, 12, 13 being available for the physical barrier system 1 may include one or more of the following:
- an access component controller comprising a processor and being configured to cause operation of the physical barrier system 1;
- an emergency button optionally comprising an illumination unit which may be ring shaped;
- an electronic door lock;
- a swing door operator;
- a sliding door operator;
- a revolving door operator;
- an access control reader which may be optionally configured to read RFID-cards and/or to wirelessly communicate with portable devices for access control and/or for re-configuration of operation parameters;
- an self-locking lock having an anti panic function;
- an electronic program switch capable of switching between different operation modes for door operators.

Certain embodiments of the invention may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g., sensor data, meta data and/or image data) may be preprocessed to obtain a feature vector, which is used as input to the machine-learning model. Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e., each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g., a classification algorithm, a regression algorithm or a similarity learning algorithm). Classification algorithms may be used when the outputs are restricted to a limited set of values (categorical variables), i.e., the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters. Reinforcement learning is a third group of machine-learning algorithms that may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e., outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g., a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g., based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g., of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input. Alternatively, the machine-learning model may be a support vector machine, a random forest model or a gradient boosting model. Support vector machines (i.e., support vector networks) are supervised learning models with associated learning algorithms that may be used to analyze data (e.g., in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments of the invention provide a data carrier having electronically readable control signals, which are capable of cooperating with a programmable computer system, such that one of the methods described herein is performed. Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

## Claims

1. A computer-implemented assisting method for creating and configuring a physical barrier system (1), the method being performed by a design and configuration software, preferably one single software application, wherein the method comprises:
providing (S101) a graphical user interface including a set of functionalities being available for the physical barrier system (1);
receiving (S102) a first user input including a selection of multiple functionalities out of the set of functionalities;
creating (S103) a virtual template for the physical barrier system (1), the virtual template including a selection of a set of hardware components (10, 11, 12, 13), wherein the selection of the set of hardware components (10, 11, 12, 13) is performed automatically by the design and configuration software based on the first user input in a manner that the multiple functionalities are supported;
upon physically creating the physical barrier system (1) including the selected hardware components (10, 11, 12, 13), configuring (S106) the set of hardware components (10, 11, 12, 13) according to the multiple functionalities.

2. The method of claim 1, further comprising:
receiving (S104) a second user input including parametrization information associated with at least part of the multiple functionalities;
automatically generating (S105) parametrization data based on the second user input and thereby determining, in the virtual template, a desired behaviour of the physical barrier system (1);
upon physically creating the physical barrier system (1) including the selected hardware components (10, 11, 12, 13), configuring (S106) the set of hardware components (10, 11, 12, 13) of the physical barrier system according to the generated parametrization data, in particular for facilitating the virtual barrier system to behave according to the virtual template.

3. The method of any one of the preceding claims, further comprising:
determining (S107), through the design and configuration software and based on the virtual template, interaction dependencies between hardware components (10, 11, 12, 13) in the set of hardware components (10, 11, 12, 13);
performing simulation (S108), using a simulation environment, of the at least one functionality and identifying potential issues before physically creating the physical barrier system (1) based on the determined interaction dependencies, wherein the simulation environment is preferably cloud-based,
preferably wherein determining (S107) the interaction dependencies and/or performing the simulation (S108) is performed (S109) using at least one machine-learning model, the machine-learning model being trained on a dataset of virtual templates and corresponding labels representing potential issues.

4. The method of claim 3, further comprising:
automatically amending (S110), based on the identified potential issues, the set of hardware components (10, 11, 12, 13) to eliminate the identified potential issues.

5. The method of claim 3 or 4, and claim 2, further comprising:
automatically updating (S111), based on the identified potential issues, the generated parametrization data to eliminate the identified potential issues;
optionally, updating the physical barrier system accordingly.

6. The method of claim 4 or 5, and claim 2, wherein automatically amending or updating is performed upon detecting a change in the parametrization data caused by a third user input.

7. The method of any one of the preceding claims, wherein the graphical user interface allows for drag-and-drop assembly of a logic providing the first and/or second and/or third user input.

8. The method of any one of the preceding claims, wherein the design and configuration software allows for assignment of privilege levels to different users, enabling control over who can provide and/or modify first and/or second and/or third user input.

9. The method of any one of the preceding claims, and claim 5, further comprising:
generating (112) an alert message in case if the point in time of the most recent update of the virtual template is after the point in time of a most recent update of the physical barrier system (1).

10. The method of any one of the preceding claims, further comprising:
storing the virtual template at least on two data storages, wherein the at least two data storages may include: a cloud-based data storage and/or a local data storage being located essentially nearby the physical barrier system (1) or a local data storage being located in a building in which the physical barrier system (1) is located after creation.

11. The method of any one of the preceding claims, wherein the set of functionalities being available for the physical barrier system (1) includes one or more of the following:
- escape route functions that may be based on an emergency button and/or a lock;
- automatic door operation functions for various types of doors, like swing doors, revolving doors, sliding doors and/or the like, wherein automatic door operation functions may include opening time, operating speed, activation and/or deactivation of sensors, and/or the like;
- access control functions that may be based on access control readers and/or may include credential validity decisions.

12. The method of any one of the preceding claims, wherein the set of hardware components (10, 11, 12, 13) being available for the physical barrier system (1) includes one or more of the following:
- an access component controller comprising a processor and being configured to cause operation of the physical barrier system (1);
- an emergency button optionally comprising an illumination unit which may be ring shaped;
- an electronic door lock;
- a swing door operator;
- a sliding door operator;
- a revolving door operator;
- an access control reader which may be optionally configured to read RFID-cards and/or to wirelessly communicate with portable user devices for access control and/or for re-configuration of operation parameters;
- an self-locking lock having an anti panic function;
- an electronic program switch capable of switching between different operation modes for door operators.

13. A physical barrier system (1) which is physically created using a method according to any one of claims 1-12.

14. A data processing apparatus, preferably a computer device, comprising means for carrying out the method of any one of claims 1-12.

15. A computer program or a computer-readable medium having stored thereon a computer program, the computer program comprising instructions which, when the program is executed by a computer, preferably by a data processing apparatus according to claim 14, cause the computer to carry out the method of any one of claims 1-12.

## Amended claims

### Amended claims in accordance with Rule 137(2) EPC.

1. A computer-implemented assisting method for creating and configuring a physical barrier system (1), the method being performed by a design and configuration software, wherein the method comprises:
providing (S101) a graphical user interface including a set of functionalities being available for the physical barrier system (1);
receiving (S102) a first user input including a selection of multiple functionalities out of the set of functionalities;
**characterized in that** the method further comprises:
creating (S103) a virtual template for the physical barrier system (1), the virtual template including a selection of a set of hardware components (10, 11, 12, 13), wherein the selection of the set of hardware components (10, 11, 12, 13) is performed automatically by the design and configuration software based on the first user input in a manner that the multiple functionalities are supported;
upon physically creating the physical barrier system (1) including the selected hardware components (10, 11, 12, 13), configuring (S106)the set of hardware components (10, 11, 12, 13) according to the multiple functionalities.

2. The method of claim 1, further comprising:
receiving (S104) a second user input including parametrization information associated with at least part of the multiple functionalities;
automatically generating (S105) parametrization data based on the second user input and thereby determining, in the virtual template, a desired behaviour of the physical barrier system (1);
upon physically creating the physical barrier system (1) including the selected hardware components (10, 11, 12, 13), configuring (S106)the set of hardware components (10, 11, 12, 13) of the physical barrier system according to the generated parametrization data, in particular for facilitating the virtual barrier system to behave according to the virtual template.

3. The method of any one of the preceding claims, further comprising:
determining (S107), through the design and configuration software and based on the virtual template, interaction dependencies between hardware components (10, 11, 12, 13) in the set of hardware components (10, 11, 12, 13);
performing simulation (S108), using a simulation environment, of the at least one functionality and identifying potential issues before physically creating the physical barrier system (1) based on the determined interaction dependencies.

4. The method of claim 3, further comprising:
automatically amending (S110), based on the identified potential issues, the set of hardware components (10, 11, 12, 13) to eliminate the identified potential issues.

5. The method of claim 3 or 4, and claim 2, further comprising:
automatically updating (S111), based on the identified potential issues, the generated parametrization data to eliminate the identified potential issues.

6. The method of claim 4 or 5, and claim 2, wherein automatically amending or updating is performed upon detecting a change in the parametrization data caused by a third user input.

7. The method of any one of the preceding claims, wherein the graphical user interface allows for drag-and-drop assembly of a logic providing the first and/or second and/or third user input.

8. The method of any one of the preceding claims, wherein the design and configuration software allows for assignment of privilege levels to different users, enabling control over who can provide and/or modify first and/or second and/or third user input.

9. The method of any one of the preceding claims, and claim 5, further comprising:
generating (112) an alert message in case if the point in time of the most recent update of the virtual template is after the point in time of a most recent update of the physical barrier system (1).

10. The method of any one of the preceding claims, further comprising:
storing the virtual template at least on two data storages, wherein the at least two data storages may include: a cloud-based data storage and/or a local data storage being located essentially nearby the physical barrier system (1) or a local data storage being located in a building in which the physical barrier system (1) is located after creation.

11. The method of any one of the preceding claims, wherein the set of functionalities being available for the physical barrier system (1) includes one or more of the following:
- escape route functions that may be based on an emergency button and/or a lock;
- automatic door operation functions for various types of doors, like swing doors, revolving doors, sliding doors and/or the like, wherein automatic door operation functions may include opening time, operating speed, activation and/or deactivation of sensors, and/or the like;
- access control functions that may be based on access control readers and/or may include credential validity decisions.

12. The method of any one of the preceding claims, wherein the set of hardware components (10, 11, 12, 13) being available for the physical barrier system (1) includes one or more of the following:
- an access component controller comprising a processor and being configured to cause operation of the physical barrier system (1);
- an emergency button;
- an electronic door lock;
- a swing door operator;
- a sliding door operator;
- a revolving door operator;
- an access control reader;
- an self-locking lock having an anti panic function;
- an electronic program switch capable of switching between different operation modes for door operators.

13. A physical barrier system (1) which is physically created using a method according to any one of claims 1-12.

14. A data processing apparatus comprising means for carrying out the method of any one of claims 1-12.

15. A computer program or a computer-readable medium having stored thereon a computer program, the computer program comprising instructions which, when the program is executed by a data processing apparatus, cause the data processing operatus to carry out the method of any one of claims 1-12.
